# EUROPÄISCHE PATENTSCHRIFT

(11) **EP 1 898 147 B1**
(45) Veröffentlichungstag und Bekanntmachung des Hinweises auf die Patenterteilung: **07.06.2017**
(21) Anmeldenummer: 06120435.0
(22) Anmeldetag: 11.09.2006
(51) Int. Cl.: F21V 8/00, F21S 8/10

(54) **Beleuchtungseinrichtung für Fahrzeuge**
Lighting device for vehicle
Dispositif d'éclairage pour véhicule

(43) Veröffentlichungstag der Anmeldung: 12.03.2008
(73) Patentinhaber: Hella KGaA Hueck & Co., 59552 Lippstadt (DE)
(72) Erfinder: Henneböhle, Klaus, 33142 Büren (DE)
(74) Vertreter: Ostermann, Thomas

(56) Entgegenhaltungen:
- EP-A- 1 434 000
- EP-A- 1 491 815
- EP-A2- 0 399 507
- DE-A1- 3 542 292
- DE-U1- 20 019 073
- DE-U1- 20 318 691
- US-A1- 2002 131 275

## Beschreibung

Die Erfindung betrifft eine Beleuchtungseinrichtung für Fahrzeuge nach dem Oberbegriff des Patentanspruchs 1

Aus der DE 103 28 216 A1 ist eine Beleuchtungseinrichtung für Fahrzeuge bekannt, die einen lang gestreckten Lichtleiter aufweist. An einer Stirnseite des Lichtleiters ist eine Lichtquelle angeordnet. Das von der Lichtquelle emittierte Licht wird stirnseitig des Lichtleiters eingekoppelt und durch Totalreflexion an Mantelflächen des Lichtleiters weitergeleitet. Eine Seite der Mantelfläche des Lichtleiters weist eine prismenförmige Kontur auf, so dass ein Teil des an dieser prismenförmigen Kontur reflektierten Lichtes an einer gegenüberliegenden Mantelfläche ausgekoppelt wird. Der Lichtleiter wird lediglich zur Erzeugung einer einzigen Lichtfunktion eingesetzt.

Aus der DE 10 2004 003 577 A1 ist eine Beleuchtungseinrichtung für Fahrzeuge bekannt, die eine Lichtquelle, einen Reflektor und eine Lichtscheibe zur Erzeugung einer Schlusslichtfunktion aufweist. In den Abstrahlbereich der Lichtquelle ist ein Lichtleiter angeordnet, so dass ein Teilbereich der Mantelfläche des Lichtleiters eine Lichteinkoppelfläche bildet, durch die Licht eingekoppelt und nach Totalreflexion an einer gegenüberliegenden Seite der Mantelfläche zur Erzeugung einer Signallichtfunktion ausgekoppelt wird. Die bekannte Beleuchtungseinrichtung zur Erzeugung von zwei Lichtfunktionen erfordert einen relativ großen Bauraum.

Aus der DE 102 19 738 A1 ist eine Beleuchtungseinrichtung für Fahrzeuge bekannt, die zum einen eine Lichtquelle und einen Reflektor zur Erzeugung einer ersten Lichtfunktion und zum anderen eine weitere Lichtquelle sowie einen Lichtleiter zur Erzeugung einer zweiten Lichtfunktion aufweist. Zur Erzeugung der zweiten Lichtfunktion wird das von einer Lichtquelle emittierte Licht an einer Stirnseite des Lichtleiters eingekoppelt und durch Totalreflexion in demselben weitergeleitet. An einer Seite der Mantelfläche weist der Lichtleiter Licht streuende Elemente auf, so dass ein Teil des Lichtes in Richtung einer gegenüberliegenden Seite der Mantelfläche umgelenkt und an derselben ausgekoppelt wird. Der Lichtleiter und die dem Lichtleiter zugeordnete Lichtquelle dienen lediglich zur Erzeugung einer einzigen Lichtfunktion.

Aus der US 2002/0131275 A1 ist eine Straßenleuchte mit Lichtleitern bekannt, die jeweils in Längsrichtung mehrere Einkerbungen aufweisen. Diese dienen dazu, eine gleichmäßige Helligkeitsverteilung über die gesamte Länge des Lichtleiters bereitzustellen.

Aus der DE 203 18 691 U1 ist eine Kraftfahrzeugleuchte mit mindestens einer Lichtquelle und mindestens einem bogenförmigen Lichtleiter bekannt. Über eine erste Stirnseite des Lichtleiters wird das Licht der Lichtquelle in den bogenförmigen Lichtleiter eingekoppelt. Eine zweite Stirnseite am anderen Ende des bogenförmigen Lichtleiters bildet eine stirnseitige Endauskoppelfläche, über die ein Teil des eingekoppelten Lichts ausgekoppelt wird. Ferner weist der bogenförmige Lichtleiter auf einer innen liegenden Seite seiner Mantelfläche eine Vielzahl von Vertiefungen auf. Ein anderer Teil des in dem gebogenen Lichtleiter geführten Lichtes trifft auf diese Vertiefungen und wird dort in Richtung der nach außen gebogenen Seite des Lichtleiters aus demselben ausgekoppelt. Hierbei bildet die nach außen gebogene Seite der Mantelfläche eine weitere Auskoppelfläche des Lichtleiters. Der Lichtleiter ist derart gebogen ausgeführt und die Lichtauskopplungsflächen sind derart an der Mantelfläche und der Stirnseite des Lichtleiters positioniert, dass ein Blinklicht als gemeinsame Lichtfunktion der beiden Auskoppelflächen gebildet und der gesetzlich geforderte Ausleuchtungsbereich für beispielsweise im Bereich der Außenspiegel angeordnete Zusatzblinkleuchten ausgeleuchtet wird.

Aus der DE 200 19 073 U1 ist eine Beleuchtungseinrichtung für Fahrzeuge bekannt, die zur Beleuchtung von Inneneinrichtungsteilen des Fahrzeugs eine ungleichmäßige Helligkeitsverteilung erzeugt. Hierzu weist ein Lichtleiter über seine gesamte Länge zum einen erste Störstelle auf, damit das Inneneinrichtungsteil mittels eines diffusen Lichtbündels beleuchtet wird. Zum anderen weist der Lichtleiter in Längsrichtung verteilt angeordnete zweite prismenförmige Störstellen auf, mittels derer ein konvergentes Lichtbündel erzeugt wird, so dass ein Funktionselement des Inneneinrichtungsteils heller beleuchtet wird als die anderen Bereiche des Inneneinrichtungsteils. Die bekannte Beleuchtungseinrichtung erzeugt somit eine einzige Lichtfunktion, nämlich die Beleuchtung des Inneneinrichtungsteils, wobei sich eine ungleichmäßige Helligkeitsverteilung einstellt.

Aus der DE 35 42 292 A1 ist eine Beleuchtungsvorrichtung für Fahrzeuge bekannt, bei der über die gesamte Länge eines Lichtleiters beabstandet zueinander angeordnete Einkerbungen vorgesehen sind. Diese bewirken ein Auskoppeln des Lichtes auf der gegenüberliegenden Seite des Lichtleiters, an der sich ein streuendes Optikelement anschließt. Hierdurch ergibt sich eine gleichmäßige Helligkeitsverteilung.

Aus der EP 1 491 815 A2 ist eine Beleuchtungsvorrichtung für Fahrzeuge bekannt, die einen Lichtleiter mit einer stirnseitigen Lichteinkoppelfläche sowie eine Mantelfläche aufweist, an der das eingekoppelte Licht in Richtung des Lichtleiters totalreflektiert wird. In einem in Lichtabstrahlrichtung gesehen hinteren Längsbereich der Mantelfläche weist der Lichtleiter eine prismenförmige Oberflächenstruktur auf, so dass auf diese auftreffendes Licht zur gegenüberliegenden Seite des Lichtleiters totalreflektiert und ausgekoppelt wird. Die bekannte Beleuchtungseinrichtung dient lediglich zur Erzeugung einer einzigen Signallichtfunktion.

Aufgabe der vorliegenden Erfindung ist es daher, eine Beleuchtungseinrichtung für Fahrzeuge derart weiterzubilden, dass Platz sparend mindestens zwei lichttechnische Funktionen für das Fahrzeug bereitgestellt werden.

Zur Lösung dieser Aufgabe weist die Erfindung die Merkmale des Patentanspruchs 1 auf.

Der besondere Vorteil der Erfindung besteht darin, dass Bauraum sparend mindestens zwei Lichtfunktionen, wie beispielsweise Schlusslicht- und Seitenmarkierungslichtfunktion, generiert werden können. Grundgedanke der Erfindung ist es, eine Einkerbung an einer Mantelfläche eines Lichtleiters derart anzubringen, dass ein zweiter Teil des eingekoppelten Lichtes aus dem vorhandenen eingekoppelten Lichtstrom abgezweigt wird in eine andere Richtung zur Erzeugung einer zweiten Lichtfunktion. Vorteilhaft können mit mindestens einer Lichtquelle und einem einzigen Lichtleiter mindestens zwei Lichtfunktionen erzeugt werden. Die Lichtquelle ist an einer Stirnseite des Lichtleiters angeordnet, so dass quasi der gesamte Lichtstrom der Lichtquelle in den Lichtleiter eingekoppelt werden kann. Nach der Erfindung weist eine Einkerbung des Lichtleiters eine solche Tiefe und/oder Form auf, dass ein für die zweite Lichtfunktion erforderlicher zweiter Teil des eingekoppelten Lichtes quer zur Längserstreckung des Lichtleiters umgelenkt wird und an einer Mantelfläche des Lichtleiters austritt. Nach der Erfindung ist der zweiten Lichtauskoppelfläche des Lichtleiters, durch die der zweite Teil des eingekoppelten Lichtes ausgekoppelt wird, ein Optikelement als Sekundäroptik vorgelagert, so dass eine Seitenmarkierungslichtfunktion bewirkt werden kann. Beispielsweise kann das Optikelement als eine Lichtscheibe mit einer solchen Kontur ausgebildet sein, dass gestreutes Licht aus dem Optikelement austritt zur Erzeugung der Seitenmarkierungslichtfunktion.

Vorzugsweise weist die Einkerbung eine schräge Einkerbfläche auf, deren Tiefe auf den erforderlichen zweiten Lichtstromteil angepasst ist. Die Einkerbung kann herstellungstechnisch einfach mittels eines entsprechend ausgestalteten Formwerkzeugs bei der Herstellung des Lichtleiters oder nachträglich mittels eines Einschnittes gebildet werden.

Weitere Vorteile der Erfindung ergeben sich aus den weiteren Unteransprüchen.

Ein Ausführungsbeispiel der Erfindung wird nachfolgend anhand einer Zeichnung näher erläutert.

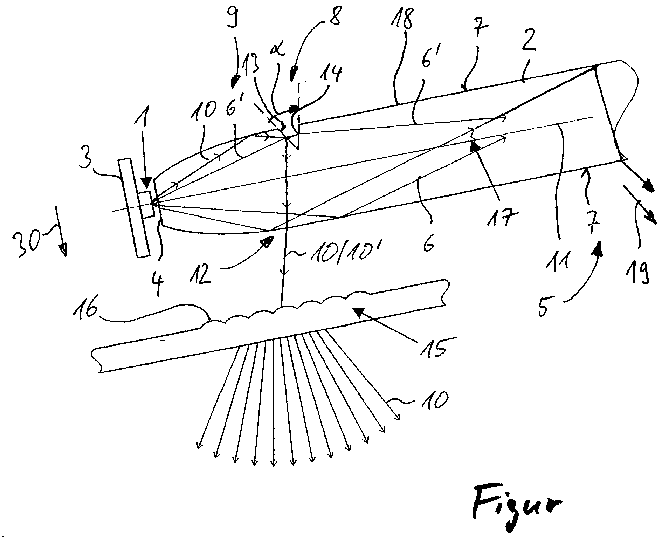

Die Zeichnung zeigt:
- Figur: einen Längsschnitt durch eine Beleuchtungseinrichtung

Eine erfindungsgemäße Beleuchtungseinrichtung für Fahrzeuge kann beispielsweise als eine Signalleuchte ausgebildet sein, die im Wesentlichen eine Lichtquelle 1 und einen Lichtleiter 2 umfasst.

Die Lichtquelle 1 ist als Leuchtdiode (LED) ausgebildet, die auf einer Platine 3 angeordnet ist.

Der Lichtleiter 2 ist lang gestreckt ausgebildet und kann im Querschnitt kreisförmig oder ellipsoidförmig ausgestaltet sein. Der Lichtleiter 2 verfügt über eine erste Stirnseite 4, der die Lichtquelle 1 zugeordnet ist. Der Lichtleiter 2 verfügt in einem in Lichtabstrahlrichtung 30 hinteren Längsbereich 18 über eine prismenförmige Oberflächenstruktur, die einen ersten Teil 6 des an der ersten Stirnseite eingekoppelten Lichtes totalreflektiert, bis es an einer ersten Lichtauskoppelfläche 5 in Richtung 19 zur Erzeugung einer ersten Lichtfunktion ausgekoppelt wird. Die erste Lichtfunktion kann beispielsweise eine Schlusslichtfunktion sein. Hierzu ist der ersten Lichtauskoppelfläche 5 eine nicht dargstellte Lichtscheibe nachgeordnet. Der erste Teil 6 des eingekoppelten Lichtes wird vorzugsweise in einem Einkoppelbereich 9 und in einem Schlusslichtbereich 17 des Lichtleiters 2 an der Prismenfläche 18 des Lichtleiters 2 totalreflektiert.

Zur Erzeugung einer zweiten Lichtfunktion, beispielsweise einer Seitenmarkierungslichtfunktion, weist der Lichtleiter 2 an der Mantelfläche 7 eine Einkerbung 8 auf, die sich vorzugsweise unmittelbar an den sich zur Lichteinkoppelfläche 4 verjüngenden Einkoppelbereich 9 anschließt. Die Einkerbung 8 ermöglicht die Umlenkung eines zweiten Teils 10 des an der ersten Stirnseite 4 eingekoppelten Lichtes quer zu einer Längsachse (Längsrichtung, Längserstreckung) 11 des Lichtleiters 2, so dass der zweite Teil 10 des eingekoppelten Lichtes an einer zweiten Lichtauskoppelfläche 12 des Lichtleiters 2 ausgekoppelt wird. Die zweite Lichtauskoppelfläche 12 des Lichtleiters 2 erstreckt sich an der Mantelfläche 7 desselben und ist auf einer zu der Einkerbung 8 gegenüberliegenden Seite der Mantelfläche 7 des Lichtleiters 2 im Bereich des Einkoppelbereiches 9 angeordnet.

Die Einkerbung 8 kann eine ebene erste Einkerbfläche 13 aufweisen, an der ein erster Teil 10' des auf die Einkerbung 8 auftreffenden eingekoppelten Lichtes 10 totalreflektiert wird in Richtung der zweiten Lichtauskoppelfläche 12. Da die erste Einkerbfläche 13 im Bereich des Einkoppelbereiches 9 angeordnet ist, sind die Lichtverluste des ersten Teils 10' des Lichtes, die durch Totalreflexion an der Mantelfläche 7 entstehen, relativ gering.

Die Einkerbung 8 weist eine ebene zweite Einkerbfläche 14 auf, die mit der ersten Einkerbfläche 13 einen spitzen Winkel (Öffnungswinkel α) bildet. Die zweite Einkerbfläche 14 ermöglicht, dass ein zweiter Teil 6' des auf die erste Einkerbfläche 13 auftreffenden und an derselben gebrochenen eingekoppelten Lichtes 6 wieder in den Lichtleiter 2 eingekoppelt wird und zur Erzeugung der ersten Lichtfunktion genutzt werden kann.

Der durch die erste Einkerbfläche 13 und die zweite Einkerbfläche 14 gebildete spitze Öffnungswinkel α weist eine Winkelhalbierende auf, die im Wesentlichen quer zur Längsachse 11 des Lichtleiters 2 verläuft.

Zur Erzeugung der Seitenmarkierungslichtfunktion kann der zweiten Lichtauskoppelfläche 12 ein Optikelement 15 als Sekundäroptik vorgelagert sein, wobei das Optikelement 15 als eine Lichtscheibe mit einer dem Lichtleiter 2 zugewandten Flachseite ausgebildet sein kann, die mit einer wellenförmigen Konturierung 16 versehen ist, um die gewünschte Seitenmarkierungslichtfunktion zu gewährleisten.

Die Platine 3 kann sich senkrecht zur Längsachse 11 des Lichtleiters erstrecken, so dass die Hauptabstrahlrichtung der Lichtquelle 1 in Längserstreckung des Lichtleiters 2 weist.

Der sich zur ersten Stirnseite 4 verjüngende Einkoppelbereich 9 ist vorzugsweise ellipsoidförmig ausgebildet. Es können der ersten Stirnseite 4 auch mehrere Lichtquellen 1 nebeneinander zugeordnet sein. Die Lichtquellen 1 können zur Erzeugung der ersten und zweiten Lichtfunktion dienen. Alternativ können jeder Lichtfunktion auch eine oder mehrere Lichtquellen zugeordnet sein, so dass allein durch Betätigen der entsprechenden Lichtquellen die gewünschte Lichtfunktion erzeugbar ist.

## Patentansprüche

1. Beleuchtungseinrichtung für Fahrzeuge, insbesondere Signalleuchte, mit einer Lichtquelle (1), mit einem Lichtleiter (2), der an einer Stirnseite (4) über eine Lichteinkoppelfläche (4) verfügt, durch die von der Lichtquelle (1) emittiertes Licht in den Lichtleiter (2) einkoppelbar ist, der eine in Längsrichtung des Lichtleiters (2) verlaufende Mantelfläche (7) aufweist, an der das eingekoppelte Licht innerhalb des Lichtleiters (2) totalreflektiert wirdund der in einem in Lichtabstrahlrichtung (30) hinteren Längsbereich (18) über eine prismenförmige Oberflächenstruktur verfügt, die einen ersten Teil (6) des eingekoppelten Lichtes totalreflektiert, bis es an einer ersten Lichtauskoppelfläche (5) des Lichtleiters (2) zur Erzeugung einer vorgegebenen Lichtfunktion ausgekoppelt wird, wobei die Mantelfläche (7) die erste Lichtauskoppelfläche (5) bildet, **dadurch gekennzeichnet, dass** die Mantelfläche (7) eine unmittelbar an den sich zur Lichteinkoppelfläche (4) verjüngenden Einkoppelbereich (9) anschließende Einkerbung (8) mit einer solchen Tiefe und/oder Form aufweist, dass ein zweiter Teil (10) des eingekoppelten Lichtes quer zur Längsrichtung des Lichtleiters (2) umgelenkt wird und an einer in einer zu der Einkerbung (8) gegenüberliegenden Bereich der Mantelfläche (7) im Bereich des Einkoppelbereiches (9) angeordneten weiteren zweiten Lichtauskoppelfläche (12) zur Erzeugung einer zweiten Lichtfunktion ausgekoppelt wird, und dass der zweiten Lichtauskoppelfläche (12) des Lichtleiters (2) ein Optikelement (15) zugeordnet ist, derart, dass der mittels des an der zweiten Lichtauskoppelfläche (12) ausgekoppelten zweiten Teils (10) des Lichtes eine Seitenmarkierungslichtfunktion erzeugt wird.

2. Beleuchtungseinrichtung nach Anspruch 1, **dadurch gekennzeichnet, dass** die erste Lichtauskoppelfläche (5) in einem zu der Lichteinkoppelfläche (4) entfernten Bereich der Mantelfläche (7) des Lichtleiters (2) angeordnet ist zur Erzeugung der ersten Lichtfunktion.

3. Beleuchtungseinrichtung nach Anspruch 1 oder 2, **dadurch gekennzeichnet, dass** die Einkerbung (8) sich unmittelbar an einen zur Lichteinkoppelfläche (4) verjüngenden Einkoppelbereich (9) des Lichtleiters (2) anschließt.

4. Beleuchtungseinrichtung nach einem der Ansprüche 1 bis 3, **dadurch gekennzeichnet, dass** die Einkerbung (8) eine erste Einkerbfläche (13) aufweist, an der zum einen ein erster Teil (10') des auf dieselbe auftreffenden eingekoppelten Lichtes (10) in Richtung der zweiten Lichtauskoppelfläche (12) totalreflektiert wird und an der zum anderen ein zweiter Teil (6') des auftreffenden eingekoppelten Lichtes (6) gebrochen wird in Richtung einer zweiten Einkerbfläche (14) der Einkerbung (8), an der der zweite Teil (6') des auf die erste Einkerbfläche (13) aufgetroffenen eingekoppelten Lichtes (6') wieder in den Lichtleiter (2) eingekoppelt wird.

5. Beleuchtungseinrichtung nach einem der Ansprüche 1 bis 4, **dadurch gekennzeichnet, dass** die erste Einkerbfläche (13) und die zweite Einkerbfläche (14) einen spitzen Öffnungswinkel (α) bilden, dessen Winkelhalbierende etwa quer zur Längsachse (11) des Lichtleiters (2) verläuft.

6. Beleuchtungseinrichtung nach einem der Ansprüche 1 bis 5, **dadurch gekennzeichnet, dass** die Einkerbung (8) als ein Einschnitt in die Mantelfläche (7) des Lichtleiters (2) ausgebildet ist.

7. Beleuchtungseinrichtung nach einem der Ansprüche 1 bis 6, **dadurch gekennzeichnet, dass** das Optikelement (15) als eine Lichtscheibe ausgebildet ist mit einer wellenförmigen Konturierung (16) an einer dem Lichtleiter (2) zugewandten Flachseite derselben.

8. Beleuchtungseinrichtung nach einem der Ansprüche 1 bis 7, **dadurch gekennzeichnet, dass** die Lichtquelle (1) auf einer Platine (3) angeordnet ist, die sich in der Nähe der Lichteinkoppelfläche (4) des Lichtleiters (2) erstreckt.

9. Beleuchtungseinrichtung nach einem der Ansprüche 1 bis 8, **dadurch gekennzeichnet, dass** die Lichtquelle (1) als eine Leuchtdiode (LED) ausgebildet ist.

10. Beleuchtungseinrichtung nach einem der Ansprüche 1 bis 9, **dadurch gekennzeichnet, dass** die über die den ersten Teil (6) des eingekoppelten Lichtes totalreflektierende prismenförmige Oberflächenstruktur gebildete erste Lichtfunktion als Schlusslicht und die mittels der den zweiten Teil (10) des eingekoppelten Lichtes in Richtung der zweiten Lichtauskoppelfläche (12) umlenkende Einkerbung (8) gebildete zweite Lichtfunktion als Seitenmarkierungslicht ausgebildet ist.

## Claims

1. A lighting device for vehicles, in particular a signaling light, with a light source (1), having a light guide (2) which has a light coupling surface (4) on one end face (4), through which light coupling surface light emitted by the light source (1) can be coupled into the light guide (2) which comprises a sheath surface (7) running in the longitudinal direction of the light guide (2), at which sheath surface the light coupled in is totally reflected within the light guide (2) and which has a surface structure in the form of a prism in a rear longitudinal region (18) in the light radiating direction (30), which surface structure totally reflects a first part (6) of the light coupled in until it is decoupled at a first light decoupling surface (5) of the light guide (2), in order to produce a predefined light function, wherein the sheath surface (7) forms the first light decoupling surface (5), **characterized in that** the sheath surface (7) comprises a notch (8) which directly adjoins the coupling region (9) which tapers towards the light coupling surface (4), said notch having such a depth and/or shape that a second part (10) of the light coupled in is deflected transversely to the longitudinal direction of the light guide (2) and is decoupled at another second light decoupling surface (12) which is arranged in a region of the sheath surface (7) opposite the notch (8) in the region of the coupling area (9), in order to produce a second light function, and that an optical element (15) is assigned to the second light decoupling surface (12) of the light guide (2), such that a side marking light function is produced by means of the second part (10) of the light which is decoupled at the second light decoupling surface (12).

2. The lighting device according to Claim 1, **characterized in that** the first light decoupling surface (5) is arranged in a region of the sheath surface (7) of the light guide (2), said region being located at a distance from the light coupling surface (4), in order to produce the first light function.

3. The lighting device according to Claim 1 or 2, **characterized in that** the notch (8) directly adjoins a coupling region (9) of the light guide (2), which tapers towards the light coupling surface (4).

4. The lighting device according to any one of Claims 1 to 3, **characterized in that** the notch (8) comprises a first notch surface (13) at which, on the one hand, a first part (10') of the light coupled in (10) incident on the same is totally reflected in the direction of the second light decoupling surface (12) and at which, on the other hand, a second part (6') of the incident light coupled in (6) is refracted in the direction of a second notch surface (14) of the notch (8), at which the second part (6') of the light coupled in (6') which has been incident on the first notch surface (13) is coupled again into the light guide (2).

5. The lighting device according to any one of Claims 1 to 4, **characterized in that** the first notch surface (13) and the second notch surface (14) form an acute opening angle (α), the angle bisector of which runs approximately transversely to the longitudinal axis (11) of the light guide (2).

6. The lighting device according to any one of Claims 1 to 5, **characterized in that** the notch (8) is configured as a recess in the sheath surface (7) of the light guide (2).

7. The lighting device according to any one of Claims 1 to 6, **characterized in that** the optical element (15) is configured as a lens having an undulating contour (16) on a flat side of the same facing the light guide (2).

8. The lighting device according to any one of Claims 1 to 7, **characterized in that** the light source (1) is arranged on a board (3) which extends in the proximity of the light coupling surface (4) of the light guide (2).

9. The lighting device according to any one of Claims 1 to 8, **characterized in that** the light source (1) is configured as a light-emitting diode (LED).

10. The lighting device according to any one of Claims 1 to 9, **characterized in that** the first light function realized by means of the surface structure in the form of a prism which totally reflects the first part (6) of the light coupled in is configured as a tail light, and the second light function realized by means of the notch (8) deflecting the second part (10) of the light coupled in in the direction of the second light decoupling surface (12) is configured as a side marking light.

## Revendications

1. Dispositif d'éclairage pour véhicules automobiles, en particulier feu de signalisation, avec une source de lumière (1), avec un guide de lumière (2), qui, sur une face frontale (4), dispose d'une surface de couplage de lumière (4), au moyen de laquelle la lumière émise par la source de lumière (1) peut être couplée dans le guide de lumière (2), qui présente une enveloppe (7) s'étendant dans la direction longitudinale du conducteur de lumière (2), sur la surface de laquelle la lumière couplée à l'intérieur du guide de lumière (2) est totalement réfléchie, et qui, dans une section longitudinale (18), qui, située en aval de la direction de rayonnement de la lumière (30), dispose d'une structure superficielle en forme de prisme, qui réfléchit totalement une première partie (6) de la lumière couplée, jusqu'à ce que ce qu'elle soit découplée sur une première surface de découplage de lumière (5) du guide de lumière (2), pour générer une fonction d'éclairage prédéterminée, sachant que la surface de l'enveloppe (7) forme la première surface de découplage de lumière (5), **caractérisé en ce que** la surface de l'enveloppe (7) est dotée d'une encoche (8), qui, se raccordant directement à une section de couplage (9) s'amincissant vers la surface de couplage de lumière (4), présente une profondeur et / ou une forme telle/s qu'une deuxième partie (10) de la lumière couplée soit dérivée, transversalement par rapport à la direction du guide de lumière (2) et soit découplée sur une deuxième surface de découplage de lumière (12), disposée dans une section de la surface de l'enveloppe (7), située à l'opposé de l'encoche (8), dans la zone de la section de couplage (9), pour générer une deuxième fonction d'éclairage, et qu'un élément optique (15) est associé à la deuxième surface de découplage de lumière (12) du guide de lumière (2) de manière à ce qu'une fonction de feu de marquage latéral soit générée au moyen de la deuxième partie de lumière (10), découplée sur la deuxième surface de découplage de lumière (12).

2. Dispositif d'éclairage selon la revendication 1, **caractérisé en ce que** la première surface de découplage de lumière (5) est disposée dans une section de la surface de l'enveloppe (7) du guide de lumière (2), éloignée de la surface de couplage de lumière (4), pour générer une première fonction d'éclairage.

3. Dispositif d'éclairage selon revendication 1 ou 2, **caractérisé en ce que** l'encoche (8) se raccorde directement à une section de couplage (9) du guide de lumière (2) s'amincissant vers la surface de couplage de lumière (4)

4. Dispositif d'éclairage selon l'une des revendications 1 à 3, **caractérisé en ce que** l'encoche (8) présente une première surface d'encoche (13), sur laquelle, d'une part, une première partie (10') de la lumière couplée (10), tombant sur celle-ci, est totalement réfléchie en direction de la deuxième surface de découplage de lumière (12), et sur laquelle, d'autre part, une deuxième partie (6') de la lumière couplée (6) incidente est brisée en direction d'une deuxième surface d'encoche (14) de l'encoche (8), sur laquelle la deuxième partie (6') de la lumière (6') couplée, tombant sur la première surface d'encoche (13) est de nouveau couplée dans le guide de lumière (2).

5. Dispositif d'éclairage selon l'une des revendications 1 à 4, **caractérisé en ce que** la première surface d'encoche (13) et la deuxième surface d'encoche (14) forment un angle d'ouverture aigu (α), dont la bissectrice s'étend à peu près transversalement par rapport à l'axe longitudinal (11) du guide de lumière (2).

6. Dispositif d'éclairage selon l'une des revendications 1 à 5, **caractérisé en ce que** l'encoche (8) est réalisée sous la forme d'une découpe, pratiquée dans la surface de l'enveloppe (7) du guide de lumière (2).

7. Dispositif d'éclairage selon l'une des revendications 1 à 6, **caractérisé en ce que** l'élément optique (15) est réalisé sous la forme d'une plaque d'éclairage, avec un contour ondulé (16), sur une face plate orientée vers le guide de lumière (2).

8. Dispositif d'éclairage selon l'une des revendications 1 à 7, **caractérisé en ce que** la source de lumière (1) est disposée sur une platine (3), qui s'étend à proximité de la surface de couplage de lumière (4) du guide de lumière (2).

9. Dispositif d'éclairage selon l'une des revendications 1 à 8, **caractérisé en ce que** la source de lumière (1) est réalisée sous la forme d'une diode électroluminescente (LED).

10. Dispositif d'éclairage selon l'une des revendications 1 à 9, **caractérisé en ce que** la première fonction d'éclairage, générée par l'intermédiaire de la structure superficielle en forme de prisme, réfléchissant totalement la première partie (6) de la lumière couplée, est réalisée en tant que feu arrière, et que la deuxième fonction d'éclairage, générée par l'intermédiaire de l'encoche (8) déviant la deuxième partie (10) de la lumière couplée en direction de la deuxième surface de découplage de lumière (12), est réalisée en tant que feu de marquage latéral.
